# EUROPÄISCHE PATENTSCHRIFT

(11) **EP 4 363 753 B1**
(45) Veröffentlichungstag und Bekanntmachung des Hinweises auf die Patenterteilung: **10.12.2025**
(21) Anmeldenummer: 22734107.0
(22) Anmeldetag: 10.06.2022
(51) Int. Cl.: F16L 37/088, G06K 19/07, G06K 19/077

(54) **VORRICHTUNG ZUR PRÜFUNG DES KORREKTEN SITZES EINER STECKKUPPLUNG**
DEVICE FOR CHECKING THE CORRECT FIT OF A PLUG-IN COUPLING
DISPOSITIF PERMETTANT DE VÉRIFIER L'AJUSTEMENT CORRECT D'UN RACCORD ENFICHABLE

(30) Priorität: 30.06.2021 DE 102021206884
(43) Veröffentlichungstag der Anmeldung: 08.05.2024
(73) Patentinhaber: ContiTech Techno-Chemie GmbH, 61184 Karben (DE)
(72) Erfinder: LINZMAIER, Markus, 30165 Hannover (DE); BORCHERT, Lukas, 30165 Hannover (DE); REUTTER, Kilian, 30165 Hannover (DE); ZIPF, Thomas, 30165 Hannover (DE)
(74) Vertreter: Preusser, Andrea
(86) Internationale Anmeldenummer: PCT/DE2022/200120
(87) Internationale Veröffentlichungsnummer: WO 2023/274466

(56) Entgegenhaltungen:
- EP-A1- 1 762 541
- DE-A1- 102019 128 949
- US-A1- 2019 257 456

## Beschreibung

Die Erfindung betrifft eine Vorrichtung zur Prüfung des korrekten Montagezustandes einer Fluid-Steckkupplung, aufweisend eine Fluid-Steckkupplung mit einem Vaterteil und einem Mutterteil.

Fluidkupplung der gattungsgemäßen Art werden in großer Vielfalt sowohl in industriellen Anwendungen, als auch im Automobilbau eingesetzt. Beispielhaft sei hier die VDA-Kupplung oder SAE-Kupplung genannt, die als Standard-Steckkupplungen im Automobilbau Verwendung finden. Die DE 10 2017 212 004 A1 zeigt beispielhaft eine VDA Kupplung.

Die genannten Kupplungen weisen ein Vaterteil und einem Mutterteil auf, die bei der Montage zusammengesteckt werden und bei korrektem Zusammenstecken in einer vorbestimmten Position zueinander verriegelt werden. Diese Verriegelung erfolgt meist selbsttätig beim Zusammenstecken der Kupplungsteile.

Bei fehlerhafter Montage kann es zu Ausfällen kommen, wenn die Verriegelung der Kupplungsteile nicht ordnungsgemäß erfolgt. Es gibt daher Lösungsansätze, die ordnungsgemäße Verriegelung der Kupplungen zu überwachen. Gängige Überwachungsmethoden basieren beispielsweise auf optischen Signalen, die bei ordnungsgemäßer Verriegelung der Kupplung sichtbar werden oder verschwinden. Die Wirksamkeit solcher Einrichtungen ist aber in schwierigen Einbausituationen nicht immer gewährleistet.

Es sind auch Lösungen bekannt, bei denen mittels in den Steckkupplungsteilen integrierter RFID-Chips überprüfbar ist, ob die zusammengehörigen Kupplungsteile zusammengesteckt sind, wobei auf den RFID-Chips Informationen gespeichert sind, die sich beispielsweise auf die zu fördernden Fluiden oder auf Temperaturen oder andere physikalische Kennwerte der Fluide beziehen und die mittels eines externen Lesegeräts auslesbar sind. Ein Beispiel für eine solche Anordnung ist die WO 2006/036863 A1.

Eine Überprüfung auf ordnungsgemäße Verriegelung der beiden Kupplungsteile ist mit dieser Anordnung jedoch nicht möglich.

Die DE 10 2019 128949 A1 zeigt eine Vorrichtung gemäß dem Oberbegriff des Anspruchs 1.

Der Erfindung lag die Aufgabe zugrunde, eine Vorrichtung der eingangs geschilderten Art zu schaffen, die auch in unübersichtlichen Einbausituationen zuverlässig das ordnungsgemäße Einrasten der genannten Steckkupplungen signalisiert.

Diese Aufgabe wird dadurch gelöst, dass das Vaterteil einen RFID-Chip aufweist, dessen Antenne eine vorbestimmte Länge aufweist, die mit dem RFID-Chip derart abgestimmt ist, dass der RFID-Chip bei Anregung durch ein RFID-Lesegerät ein vorbestimmtes erstes Signal oder kein Signal aussendet und das Mutterteil eine Antennenordnung aufweist, wobei die Antennenanordnung eine von der vorbestimmten Länge der Antenne des RFID-Chips abweichende Länge aufweist, wobei weiter bei genau ordnungsgemäßer Verriegelung vom in das Mutterteil eingesteckten Vaterteil mit dem Mutterteil der RFID-Chip mit der Antennenanordnung des Mutterteils in derart in Wirkverbindung steht und die Länge der Antennenanordnung des Mutterteils mit dem RFID-Chip derart abgestimmt ist, dass der RFID-Chip bei Anregung durch ein RFID-Lesegerät ein vorbestimmtes, vom ersten Signal abweichendes zweites Signal aussendet, wobei bei genau ordnungsgemäßer Verriegelung vom in das Mutterteil eingesteckten Vaterteil die Wirkverbindung zwischen RFID-Chip und Antennenanordnung des Mutterteils durch elektromagnetische Induktion ausgebildet ist.

Diese Anordnung hat den Vorteil, dass genau unterscheidbar ist die Steckkupplung ordnungsgemäß verriegelt ist da, dies nur bei Detektion des zweiten RFID Signals gegeben ist. Da externe Lesegeräte auch Abstände von einigen Metern des RFID-Chips detektieren können, ist eine zuverlässige Erkennung in optisch unübersichtlichen oder schwer zugänglichen Stellen trotzdem möglich.

Diese Anordnung hat den Vorteil, dass keine mechanische Verbindung zwischen der Antennenanordnung und dem RFID-Chip notwendig ist, sodass die Wirkverbindung nicht durch Verschleiß kontaktierender Bauteile gefährdet ist.

In einer Weiterbildung der Erfindung ist der RFID-Chip auf das Vaterteil aufgeklebt.

Das Aufkleben vermeidet ein teures Werkzeug zum Umspritzen des RFID-Chips. In einer Weiterbildung der Erfindung weist der RFID-Chip einen geschlitzten, ringförmigen Halter auf, der aus zwei nahezu halbkreisförmigem Halbteilen ausgebildet ist, die an gegenüberliegenden Seiten des RFID-Chips angeordnet sind und eine Federsteifigkeit aufweisen, mit der der Halter eine Ringfeder ähnlich eines Sprengringes bildet und weist das Vaterteil eine Ringnut auf, in die der federsteife Halter des RFID-Chips einclipsbar ist.

Diese Anordnung hat den Vorteil, dass der RFID-Chip eine zuverlässig definierte Lage aufweist und durch das Einclipsen in die Ringnut gut gegen Abrieb geschützt ist.

In einer Weiterbildung der Erfindung ist die Antennenanordnung des Mutterteils als aufgedruckter Ring aus elektrisch leitendem Material ausgebildet.

Das Drucken, beispielsweise mit elektrisch leitfähigen Tinten mittels eines Tintenstrahl-Druckkopfes ist eine besonders vielseitige Möglichkeit, ohne dass ein aufwändiges Spritzgusswerkzeug benötigt wird.

In einer Weiterbildung der Erfindung ist die Antennenanordnung als elektrisch leitfähige Folie oder elektrisch leitfähige Draht ausgebildet, wobei die elektrisch leitfähige Folie oder der elektrisch leitfähige Draht eine ringförmige, geschlitzte Kontur und eine Federsteifigkeit aufweisen und weist das Mutterteil eine ringförmige Nut auf, in die die federsteife, geschlitzte ringförmige Kontur der der elektrisch leitfähigen Folie oder des elektrisch leitfähigen Drahtes einclipsbar ist.

Diese Ausführungsform ermöglicht eine einfache Herstellung der Kupplungsteile ohne dass ein aufwändiges Spritzgießwerkzeug benötigt wird.

In einer Weiterbildung der Erfindung weist der RFID-Chip auf seiner der Antennenanordnung zugewandten Seite zwei elektrische Kontakte auf, die in Umfangsrichtung voneinander beabstandet sind, wobei der Abstand in Umfangsrichtung zwischen den elektrischen Kontakten größer ist als die Breite des Schlitzes, sodass ein sicherer elektrischer Kontakt des RFID-Chips mit der Antennenanordnung des Mutterteils auch dann gegeben ist, wenn der RFID-Chip beim Einclipsen des Vaterteils in das Mutterteil dem Schlitz der elektrischen leitfähigen Folie der Antennenanordnung gegenüber zu liegen kommt.

Ist der Abstand der elektrischen Kontakte des RFID-Chips größer als die Breite des Schlitzes der Antennenanordnung, ist damit sichergestellt, dass in ordnungsgemäß verriegeltem Zustand von Vater- und Mutterteil immer ein zuverlässiger elektrischer Kontakt zwischen RFID-Chip und Antennenanordnung besteht

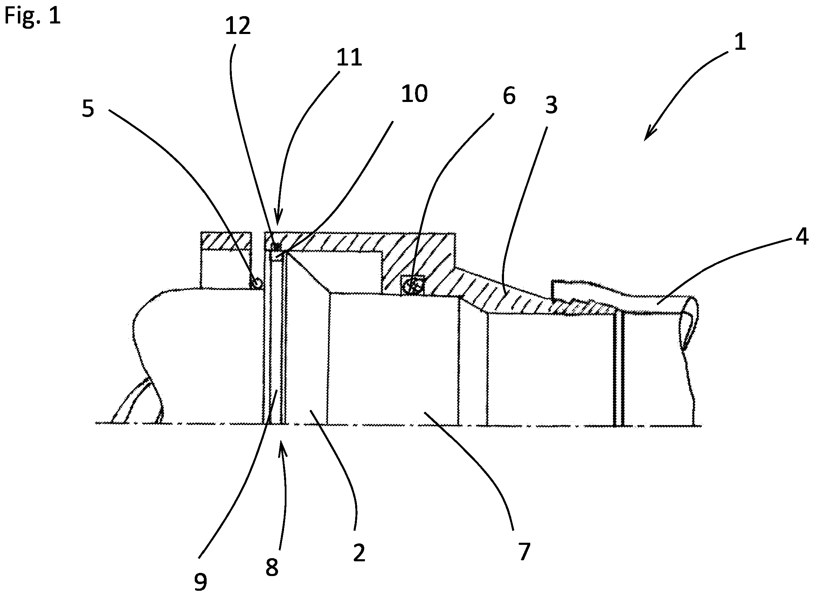

Anhand der Zeichnung wird nachstehend ein Ausführungsbeispiel der Erfindung näher erläutert. Die Fig. 1 zeigt eine Fluid-Steckkupplung 1 mit Vaterteil 2 und Mutterteil 3 in einer Prinzipdarstellung als Längsschnitt. Auf das Mutterteil 3 ist ein Schlauch 4 aufgesteckt. Vaterteil 2 und Mutterteil 3 sind zusammengesteckt und mittels einer Federklammer 5 miteinander verriegelt. Eine O-Ring-Dichtung 6 dichtet das Vaterteil 2 gegen das Mutterteil 3 ab.

Das Vaterteil 2 weist an seinem in das Mutterteil 3 eingestecktem Stutzenteil 7 eine Ringnut 8 auf, in der eine ringförmige, geschlitzte Ringfeder 9 eingeclipst ist. An der Ringfeder 9 ist ein RFID-Chip 10 mit hier nicht gezeigter interner Antenne angeordnet, die so abgestimmt ist, dass bei Anregung durch ein nicht dargestelltes externes Lesegerät der RFID-Chip 10 ein erstes oder kein Signal zurückgibt. Die geschlitzte Ringfeder 9 ist aus einem elektrisch nicht leitenden Material ausgebildet, sodass der RFID-Chip 10 in dieser Position nur seine interne Antenne aufweist.

Das Mutterteil 3 weist ebenfalls eine Ringnut 11 auf, in der ein geschlitzter, ringförmiger Draht 12 angeordnet ist. Der geschlitzte Ringdraht 12 weist eine Federsteifigkeit auf und ist in die Ringnut 11 eingeclipst. Der geschlitzte Ringdraht 12 ist aus elektrisch leitfähigen Material ausgebildet.

Im gezeigten ordnungsgemäß verriegelten Zustand der Kupplung 1 liegen sich der RFID-Chips 10 und der elektrisch leitfähige Ringdraht 12 axial gegenüber, der Ringdraht 12 steht nur genau in dieser Position mit dem RFID-Chip im elektrisch leitender Verbindung, sodass er als Antenne für den RFID-Chip 10 wirkt. Damit weist der RFID-Chip 10 nicht mehr nur seine interne Antenne auf und gibt bei Anregung durch ein externes Lesegerät ein zweites, vom ersten Signal verschiedenes Signal zurück

Sind Vaterteil 2 und Mutterteil 3 nicht ordnungsgemäß verriegelt, führt dies zu Abweichungen der axialen Lage von RFID-Chip 10 und Ringdraht 12 gegeneinander. Damit ist ein elektrischer Kontakt zwischen RFID-Chip 10 und Ringdraht 12 nicht mehr gegeben, sodass das Lesegerät in einem solchen Fall von dem RFID-Chips 10 statt seines zweiten Signals nur sein erstes oder kein Signal empfängt.

Eine solche Anordnung ermöglicht es, durch die Detektion eines lageabhängigen Signals des RFID-Chips 10 durch das externe Lesegerät genau festzustellen, ob Vaterteil und Mutterteil ordnungsgemäß verriegelt sind.

### Bezugszeichenliste

### (Teil der Beschreibung)

- 1: Fluid-Steckkupplung
- 2: Vaterteil der Fluid-Steckkupplung 1
- 3: Mutterteil der Fluid-Steckkupplung 1
- 4: Schlauch
- 5: Federklammer
- 6: O-Ring-Dichtung
- 7: Stutzenteil des Vaterteils 2
- 8: Ringnut im Stutzenteil 7
- 9: Ringfeder
- 10: RFID-Chip
- 11: Ringnut im Mutterteil 3
- 12: geschlitzter, ringförmiger Federdraht; Antennenanordnung

## Patentansprüche

1. Vorrichtung zur Prüfung des korrekten Montagezustandes einer Fluid-Steckkupplung (1), aufweisend eine Fluid-Steckkupplung (1) mit einem Vaterteil (2) und einem Mutterteil (3), wobei das Vaterteil (2) einen RFID-Chip (10) aufweist, dessen Antenne eine vorbestimmte Länge aufweist, die mit dem RFID-Chip (10) derart abgestimmt ist, dass der RFID-Chip (10) bei Anregung durch ein RFID-Lesegerät ein vorbestimmtes erstes Signal oder kein Signal aussendet und das Mutterteil (3) eine Antennenordnung (12) aufweist, wobei die Antennenanordnung (12) eine von der vorbestimmten Länge der Antenne des RFID-Chips (10) abweichende Länge aufweist, wobei weiter bei genau ordnungsgemäßer Verriegelung vom in das Mutterteil (3) eingesteckten Vaterteil (2) mit dem Mutterteil (3) der RFID-Chip (10) mit der Antennenanordnung (12) des Mutterteils (3) in elektrisch leitendem Kontakt steht und die Länge der Antennenanordnung (12) des Mutterteils (3) mit dem RFID-Chip (10) derart abgestimmt ist, dass der RFID-Chip (10) bei Anregung durch ein RFID-Lesegerät ein vorbestimmtes, vom ersten Signal abweichendes zweites Signal aussendet, **dadurch gekennzeichnet, dass** bei genau ordnungsgemäßer Verriegelung vom in das Mutterteil (3) eingesteckten Vaterteil (2) die Wirkverbindung zwischen RFID-Chip (10) und Antennenanordnung (12) des Mutterteils (3) durch elektromagnetische Induktion ausgebildet ist.

2. Vorrichtung nach Anspruch 1, **dadurch gekennzeichnet, dass** der RFID-Chip (10) auf das Vaterteil (2) aufgeklebt ist.

3. Vorrichtung nach Anspruch 1, **dadurch gekennzeichnet, dass** der RFID-Chip (10) einen geschlitzten, ringförmigen Halter (9) aufweist, der aus zwei nahezu halbkreisförmigem Halbteilen ausgebildet ist, die an gegenüberliegenden Seiten des RFID-Chips (10) angeordnet sind und eine Federsteifigkeit aufweisen, mit der der Halter (9) eine Ringfeder (9) ähnlich eines Sprengringes bildet und weist das Vaterteil (2) eine Ringnut (8) auf, in die der federsteife Halter (9) des RFID-Chips (10) einclipsbar ist.

4. Vorrichtung nach mindestens einem der vorstehenden Ansprüche, **dadurch gekennzeichnet, dass** die Antennenanordnung (12) des Mutterteils (3) als aufgedruckter Ring aus elektrisch leitendem Material ausgebildet ist.

5. Vorrichtung nach mindestens einem der Ansprüche 1 bis 3, **dadurch gekennzeichnet, dass** die Antennenanordnung (12) als elektrisch leitfähige Folie oder elektrisch leitfähiger Draht (12) ausgebildet ist, wobei die elektrisch leitfähige Folie oder der elektrisch leitfähige Draht (12) eine ringförmige, geschlitzte Kontur und eine Federsteifigkeit aufweisen und weist das Mutterteil (3) eine ringförmige Nut (11) auf, in die die federsteife, geschlitzte ringförmige Kontur der elektrisch leitfähigen Folie oder des elektrisch leitfähigen Drahtes (12) einclipsbar ist.

6. Vorrichtung nach Anspruch 5, **dadurch gekennzeichnet, dass** der RFID-Chip (10) auf seiner der Antennenanordnung (12) zugewandten Seite zwei elektrische Kontakte aufweist, die in Umfangsrichtung voneinander beabstandet sind, wobei der Abstand in Umfangsrichtung zwischen den elektrischen Kontakten größer ist als die Breite des Schlitzes, sodass ein sicherer elektrischer Kontakt des RFID-Chips (10) mit der Antennenanordnung (12) des Mutterteils (3) auch dann gegeben ist, wenn der RFID-Chip (10) beim Einclipsen des Vaterteils (2) in das Mutterteil (3) dem Schlitz der elektrischen leitfähigen Folie oder des elektrisch leitfähigen Drahtes (12) der Antennenanordnung (12) gegenüber zu liegen kommt.

## Claims

1. Apparatus for testing the correct mounting state of a fluid plug-in coupling (1), comprising a fluid plug-in coupling (1) having a parent part (2) and a nut part (3), wherein the parent part (2) has an RFID chip (10), the antenna of which has a predetermined length which is matched with the RFID chip (10) in such a way that the RFID chip (10) emits a predetermined first signal or no signal when excited by an RFID reader and the mother part (3) emits a predetermined antenna order (12) wherein the antenna arrangement (12) has a length deviating from the predetermined length of the antenna of the RFID chip (10), wherein further, if the connector is exactly properly locked from the parent part (2) inserted into the mother part (3) with the nut part (3), the RFID chip (10) is in electrically conductive contact with the antenna arrangement (12) of the parent part (3) and the length of the antenna arrangement (12) of the parent part (3) is matched to the RFID chip (10) in such a way, that the RFID chip (10) emits a predetermined second signal deviating from the first signal when excited by an RFID reader, **characterized by** thisthat if the parent part (2) inserted into the nut part (3) is exactly properly locked, the active connection between the RFID chip (10) and the antenna arrangement (12) of the mother part (3) is formed by electromagnetic induction.

2. The apparatus according to claim 1, **characterized in that** the RFID chip (10) is glued to the parent part (2).

3. The apparatus according to claim 1, **characterized in that** the RFID chip (10) has a slotted, ring-shaped holder (9) consisting of two nearly semicircular half-parts arranged on opposite sides of the RFID chip (10) and having a spring stiffness with which the holder (9) forms a ring spring (9) similar to a snap ring and the parent part (2) has a ring groove (8), into which the spring-stiff holder (9) of the RFID chip (10) can be clipped.

4. An apparatus according to at least one of the preceding claims, **characterized in that** the antenna assembly (12) of the parent part (3) is formed as a printed ring of electrically conductive material.

5. An apparatus according to at least one of claims 1 to 3, **characterized in that** the antenna arrangement (12) is formed as an electrically conductive foil or electrically conductive wire (12), wherein the electrically conductive foil or wire (12) has a ring-shaped, slotted contour and a spring stiffness, and the nut part (3) has a ring-shaped groove (11) into which the spring-stiff, slotted ring-shaped contour of the electrically conductive film or the electrically conductive wire (12) can be clipped in.

6. The apparatus according to claim 5, **characterized in that** the RFID chip (10) has two electrical contacts on its side facing the antenna arrangement (12) which are spaced apart in the circumferential direction, wherein the distance in the circumferential direction between the electrical contacts is greater than the width of the slot, so that a secure electrical contact of the RFID chip (10) with the antenna assembly (12) of the parent part (3) is also given then, if the RFID chip (10) comes to rest opposite the slot of the electrically conductive foil or the electrically conductive wire (12) of the antenna arrangement (12) when clipping the parent part (2) into the mother part (3).

## Revendications

1. Appareil pour tester l'état de montage correct d'un accouplement enfichable à fluide (1), comprenant un accouplement enfichable à fluide (1) ayant une partie mère (2) et une pièce d'écrou (3), dans lequel la partie mère (2) a une puce RFID (10), dont l'antenne a une longueur prédéterminée qui est adaptée à la puce RFID (10) de telle sorte que la puce RFID (10) émet un premier signal prédéterminé ou aucun signal lorsqu'elle est excitée par un lecteur RFID et que la partie mère (3) émet un ordre d'antenne prédéterminé (12) dans lequel le dispositif d'antenne (12) a une longueur s'écartant de la longueur prédéterminée de l'antenne de la puce RFID (10), dans lequel, en outre, si le connecteur est exactement correctement verrouillé à partir de la partie mère (2) insérée dans la partie mère (3) avec la partie d'écrou (3), la puce RFID (10) est en contact électriquement conducteur avec le dispositif d'antenne (12) de la partie mère (3) et la longueur de la disposition d'antenne (12) de la partie mère (3) est adaptée à la puce RFID (10) de telle manière, que la puce RFID (10) émet un second signal prédéterminé s'écartant du premier signal lorsqu'elle est excitée par un lecteur RFID, **caractérisé par** cetteque si la partie mère (2) insérée dans la partie d'écrou (3) est exactement correctement verrouillée, la connexion active entre la puce RFID (10) et la disposition de l'antenne (12) de la partie mère (3) est formée par induction électromagnétique.

2. Dispositif selon la revendication 1, **caractérisé en ce que** la puce RFID (10) est collée à la partie mère (2).

3. Dispositif selon la revendication 1, **caractérisé en ce que** la puce RFID (10) présente un support (9) fendu, en forme d'anneau, composé de deux demi-pièces presque semi-circulaires disposées sur les côtés opposés de la puce RFID (10) et ayant une rigidité de ressort avec laquelle le support (9) forme un ressort annulaire (9) semblable à un anneau élastique et la partie mère (2) a une rainure annulaire (8), dans lequel le support rigide à ressort (9) de la puce RFID (10) peut être clipsé.

4. Dispositif selon au moins l'une des revendications précédentes, **caractérisé en ce que** l'ensemble d'antenne (12) de la partie mère (3) est formé d'un anneau imprimé en matériau électriquement conducteur.

5. Dispositif selon au moins l'une des revendications 1 à 3, **caractérisé en ce que** la disposition de l'antenne (12) est formée d'une feuille électriquement conductrice ou d'un fil électriquement conducteur (12), dans lequel la feuille ou le fil électriquement conducteur (12) a un contour fendu en forme d'anneau et une rigidité de ressort, et la partie de l'écrou (3) a une rainure en forme d'anneau (11) dans laquelle le ressort rigide, Le contour en forme d'anneau fendu du film conducteur d'électricité ou du fil conducteur d'électricité (12) peut être clipsé.

6. Dispositif selon la revendication 5, **caractérisé en ce que** la puce RFID (10) comporte deux contacts électriques sur son côté face à l'agencement d'antenne (12) qui sont espacés dans la direction circonférentielle, la distance dans la direction circonférentielle entre les contacts électriques étant supérieure à la largeur de la fente, de sorte qu'un contact électrique sécurisé de la puce RFID (10) avec l'ensemble d'antenne (12) de la partie mère (3) est également donné alors, si la puce RFID (10) s'immobilise en face de la fente de la feuille conductrice d'électricité ou du fil conducteur d'électricité (12) de l'agencement d'antenne (12) lors de l'accrochage de la partie parent (2) dans la partie mère (3).
